Europäisches Patentamt

European Patent Office

Office européen des brevets

(19)

(11) Veröffentlichungsnummer : **0 082 922**
**B1**

(12) **EUROPÄISCHE PATENTSCHRIFT**

(45) Veröffentlichungstag der Patentschrift :
21.11.85

(51) Int. Cl.⁴ : **F 16 L 37/28**

(21) Anmeldenummer : **82107835.9**

(22) Anmeldetag : **26.08.82**

(54) Schnellverschlusskupplung.

(30) Priorität : 04.12.81 DE 3148029

(43) Veröffentlichungstag der Anmeldung :
06.07.83 Patentblatt 83/27

(45) Bekanntmachung des Hinweises auf die Patenterteilung : 21.11.85 Patentblatt 85/47

(84) Benannte Vertragsstaaten :
DE FR GB

(56) Entgegenhaltungen :
DE-B- 1 228 470
FR-A- 1 147 057
GB-A- 1 011 786
US-A- 3 809 122
US-A- 3 918 485

(73) Patentinhaber : Carl Kurt Walther GmbH & Co. KG
Bahnstrasse 43-51 Postfach 11 06 42
D-5600 Wuppertal 11 (DE)

(72) Erfinder : Momberg, Wolfgang
Magdalenenstrasse 50
D-5600 Wuppertal 1 (DE)

(74) Vertreter : Rieder, Hans-Joachim, Dr.
Corneliusstrasse 45 Postfach 11 04 51
D-5600 Wuppertal 11 (DE)

## Beschreibung

Die Erfindung bezieht sich auf eine Schnellverschlußkupplung, bestehend aus zwei in dichtenden Sitz zueinander bringbaren Kupplungshälften, von denen die eine einen gegen eine Sitzfläche des Kupplungsgehäuses federbelasteten Ventilteller aufweist, welcher von einem Stößel der anderen Kupplungshälfte in die Ventil-Öffnungsstellung verlagerbar ist, welcher Stößel an einer rückwärts gerichteten Flanke die Ventilsitzfläche für das Verschlußventil der anderen Kupplungshälfte bildet derart, daß eine in Ventilschließrichtung belastete, im Außengehäuse dieser Kupplungshälfte federbelastet verschiebliche Ventilbüchse mit ihrem Stirnrand gegen die rückwärts gerichtete Flanke tritt, welche Büchse eine Steuerschulter aufweist, gegen die der Stirnrand des Außengehäuses der einen Kupplungshälfte tritt, welche Ventilbüchse einen im Dichtsitz in das Außengehäuse der einen Kupplungshälfte eintretenden Kragen besitzt.

Eine Schnellverschlußkupplung, die aus zwei in dichtenden Sitz zueinander bringbaren Kupplungshälften besteht und die einen federbelasteten Ventilteller in der ersten sowie einen diesen in Schließrichtung verlagernden Stößel in der zweiten Kupplungshälfte aufweist, der an seiner rückwärtigen Flanke die Ventilsitzfläche für das Verschlußventil der zweiten Kupplungshälfte bildet, indem eine in Schließrichtung federbelastete Büchse über eine Steuerschulter gegen den Stirnrand des Außengehäuses der ersten Kupplungshälfte tritt, ist beispielsweise aus der FR-A-1 147 057 oder der DE-B-1 228 470 bekannt. Darüber hinaus zeigt die letztgenannte Druckschrift einen im Dichtsitz in das Außengehäuse der ersten Kupplungshälfte eintretenden vorstehenden Kragen. Der Kragen weist im einen Fall eine konische Mantelfläche auf, welche vom Dichtungsring der ersten Kupplungshälfte umfangen wird ; im andern Fall tritt der Fasenbereich des Kragens gegen den Dichtungsring.

Solche, praktisch leckfrei arbeitenden Schnellverschlußkupplungen können, je nach der geführten Medienart und -temperatur, bei längeren Betriebszeiten Schließverzögerungen bringen. Die Dichtungsringe können bis zu einem Haftsitz verkleben. Man hilft sich daher in der Weise, daß man die Ventilbüchsen-Belastungsfeder stärker wählt. Das hat aber zur Folge, daß die Verriegelungskraft erhöht werden muß. Dabei muß auch noch der Betriebsdruck überwunden werden. Vor allem bei Multikupplungen, bei denen Schnellverschlußkupplungen auf zwangsgeführten, miteinander verriegelbaren Paletten zum Einsatz kommen, ist die erläuterte Maßnahme nicht günstig.

Aufgabe der Erfindung ist es, eine gattungsgemäße Schnellverschlußkupplung so auszubilden, daß bei günstiger Bauform ein gutes Verhältnis zwischen Betriebsdruck und Ver- bzw. Entriegelungskraft erreicht wird.

Gelöst ist diese Aufgabe durch die im Anspruch 1 angegebene Erfindung.

Die Unteransprüche sind vorteilhafte Weiterbildungen der erfindungsgemäßen Schnellverschlußkupplung.

Zufolge solcher Ausgestaltung ist ein Schnellverschlußkupplung von insbesondere erhöhtem Gebrauchswert erzielt : Der in Dichtsitz zur einen Kupplungshälfte tretende Kragen bringt den überraschenden Vorteil, die Trennkräfte der Kupplungshälften erstmals als die Ventilbüchsen-Belastungsfeder unterstützende Komponente einzusetzen. Über die Haftkraft des Dichtsitzes zieht sich beim Trennen der Kupplungshälften die Ventilbüchse in die Schließstellung. Dies bedeutet zum einen, daß eine schwächere Ventilbüchsen-Belastungsfeder Verwendung finden kann. Zum anderen brauchen nicht mehr so hohe Kupplungskräfte aufgebracht zu werden. Das Verhältnis derselben in Bezug auf den Betriebsdruck ist günstiger. Die baulichen Mittel sind einfach und auch montagegünstig insofern, als die Ventilbüchse an ihrem dem Kragen gegenüberliegenden Ende gegabelt ist, die beiden Gabelschenkel in Überlappung liegen zum ebenfalls gegabelten Endbereich von Innen- und Außengehäuse der Gehäusehälfte und im Zwischenraum zwischen den Gabelschenkeln die Ventilbüchsen-Belastungsfeder angeordnet ist, welcher so eine Federkammer bildende Zwischenraum gegenüber dem Medium gut abgedichtet ist durch einen dichten Sitz zwischen den einwärts liegenden Gabelschenkeln der Ventilbüchse und des Außengehäuses. Zudem besteht eine vorteilhafte Ausgestaltung darin, daß die Dichtungsfläche der Ventilbüchse vom Stirnrand des Kragens gebildet ist. Schließlich liegt eine montagetechnisch vorteilhafte Ausgestaltung noch dadurch vor, daß die beiden Gabelschenkel der Ventilbüchse aus zwei im Bereich der Steuerschulter verbundenen Teilen besteht.

Weitere Vorteile und Einzelheiten des Erfindungsgegenstandes sind nachstehend anhand eines zeichnerisch veranschaulichten Ausführungsbeispieles näher erläutert. Es zeigt :

Figur 1 die erfindungsgemäße Schnellverschlußkupplung in gekuppeltem Zustand, und zwar im Teilschnitt und

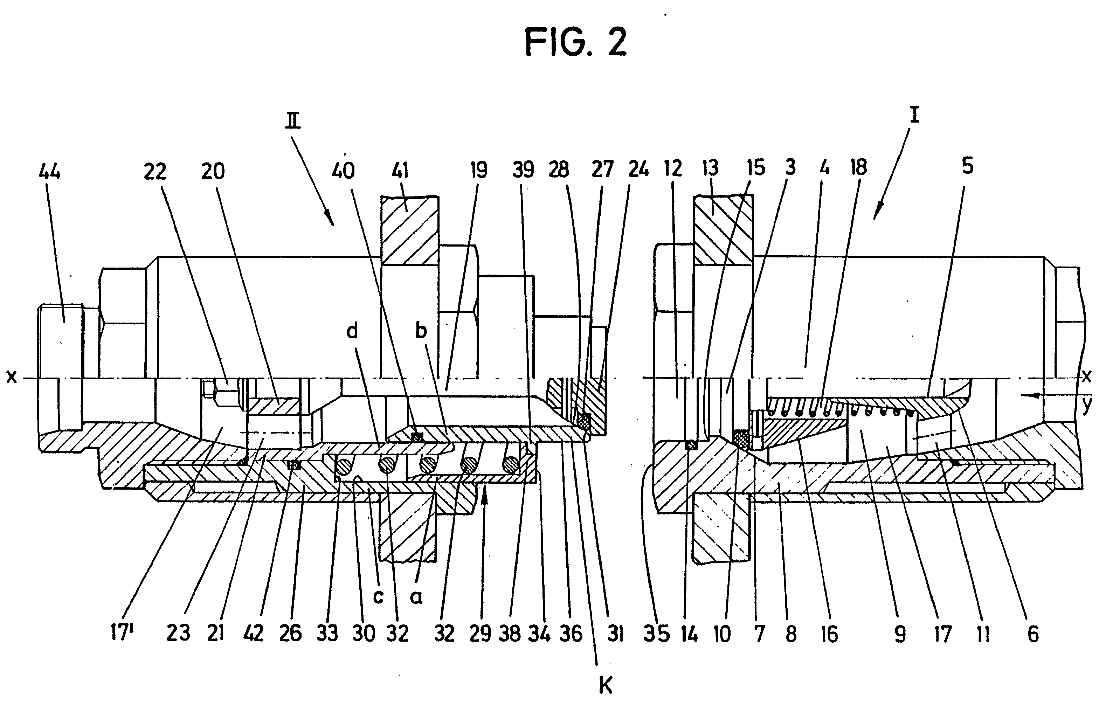

Figur 2 diese Schnellverschlußkupplung in entkuppeltem Zustand, ebenfalls im Teilschnitt.

Die dargestellte Schnellverschlußkupplung besteht aus den Kupplungshälften I und II.

Die eine Kupplungshälfte I enthält einen unter Federbelastung stehenden Ventilteller 3, dessen Schaft 4 sich in einer zentralliegenden Bohrung 5 eines Innengehäuses 6 führt. Der Tellerrand des Ventiltellers ist konisch gehalten und tritt gegen eine eine entsprechenden Neigungswinkel aufweisende Sitzfläche 7 eines Außengehäuses 8.

Die als Schraubengang-Druckfeder gestaltete Ventilfeder ist mit 9 bezeichnet. Sie stützt sich mit ihrer einen Endwindung auf eine Ringschulter des Innengehäuses ab und belastet mit ihrer anderen Endwindung den Rücken des Ventiltellers. Der Tellerand weist den üblichen O-Ring als Dichtungsring 10 auf.

Das Innengehäuse 6 besitzt mehrere konzentrisch zur Längsmittelachse x-x der Schnellverschlußkupplungs liegende Durchflußöffnungen 11 auf. Im Anschluß an die Sitzfläche 7 formt die Kupplungshälfte I eine zentrale Stecköffnung 12. Im Bereich dieser Stecköffnung ist das Außengehäuse 8 an einer vertikalen Trägerplatte 13 befestigt. In einer Ringnut der Stecköffnung 12 sitzt ein Dichtungsring 14. Die Stecköffnungswandung geht im Anschluß an einen überwiegend zylindrischen Abschnitt in eine Ringschulter 15 über.

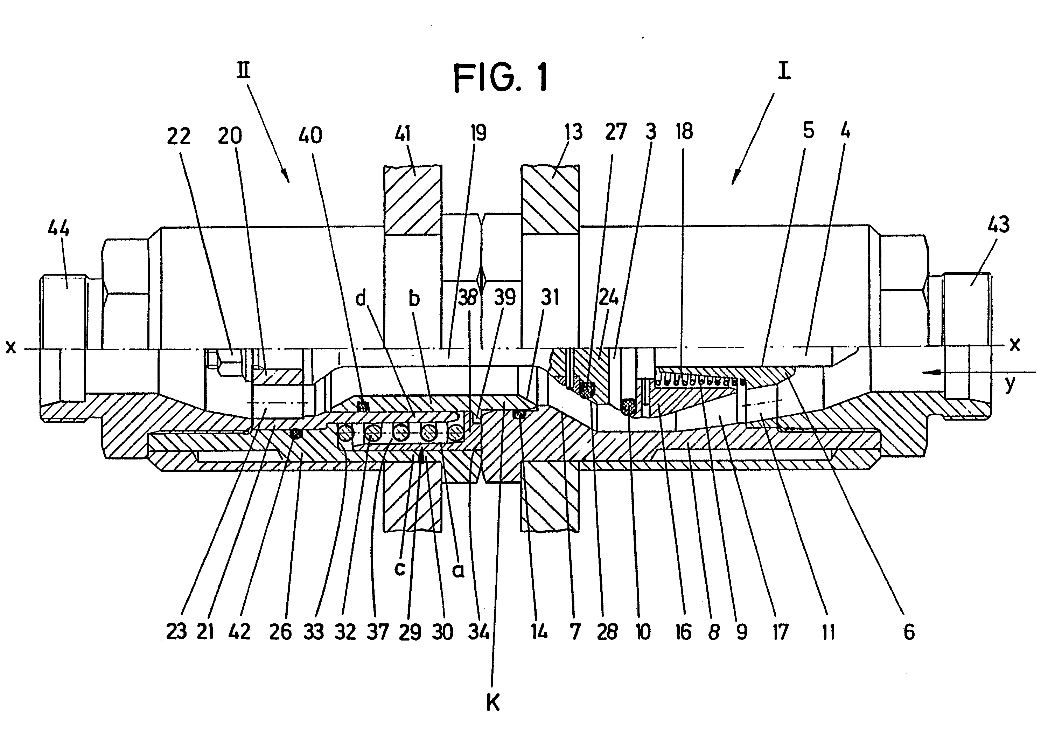

Im Bereich des Tellerrandes setzt eine von Ventilteller-Rücken ausgehende, sich nach rückwärts hin verjüngende Ringwand 16 an, welche die Feder 9 nach außen hin, d. h. gegenüber dem Strömungsraum 17 abschirmt. Sie bildet insoweit auch eine Federkammer 18, die bei in Kupplungsstellung befindlicher Schnellverschlußkupplung (Fig. 1) bis auf einen kleinen Ringspalt geschlossen ist.

Die andere Kupplungshälfte II enthält einen den Ventilteller 3 entgegen Federbelastung in die Ventil-Öffnungsstellung verlagernden, zentralliegenden, freistehenden, vom dortigen Strömungsraum 17' umgebenen Stößel 19. Letzterer geht von einem Querboden 20 eines Innengehäuses 21 dieser Kupplungshälfte II aus. Er ist dort mit Hilfe einer Mutter 22 verankert. Der Querboden weist konzentrisch angeordnete Durchflußöffnungen 23 auf. Der Kopf 24 des Stößels 19 überragt die kupplungsseitige Stirnwand des Außengehäuses 26 der Kupplungshälfte II. Sein Durchmesser ist so gewählt, daß er die Stecköffnung 12 der einen Kupplungshälfte I frei durchfährt. Mit seiner rückwärts gerichteten, schräg hinterschnittenen Flanke bildet der Stößelkopf 24 eine einen Dichtungsring 27 tragende Ventilsitzfläche 28. Mit letzterer wirkt eine in Ventil-Schließrichtung federbelastete, im Außengehäuse 26 dieser Kupplungshälfte verschieblich geführte Ventilbüchse 29 zusammen. Letztere gleitet in einer zylindrischen Ausdrehung 30 des Außengehäuses und kann ein- oder mehrteilig gestaltet sein. Beim Ausführungsbeispiel ist eine mehrteilige Ausgestaltung gewählt.

Die Ventilbüchse 29 tritt in Schließstellung mit ihrer dem Schrägungsverlauf der Ventilsitzfläche 28 entsprechend ausgerichteten trichterförmigen Stirnfläche 31 gegen die konische Ventilsitzfläche 28 bzw. deren Dichtungsring 27.

Die die Ventilbüchse 29 in Schließanlage haltende Belastungsfeder ist mit 32 bezeichnet. Es handelt sich um eine Schraubengangdruckfeder, die mit ihrer einen Endwindung sich an einer von der Ausdrehung 30 gebildeten Schulter 33 abstützt und mit ihrer anderen Endwindung die Ventilbüchse 29 von innen her belastet.

Desweiteren ist der Ventilbüchse 29 eine Steuerschulter 34 angeformt. Gegen diese tritt bei Herbeiführung der Kupplungsstellung die Stirnwand 35 der einen Kupplungshälfte I. Die gegen die Ventilsitzfläche 28 tretende Stirnfläche 31 der Büchse befindet sich an einem gegenüber dem allgemeinen Büchsenquerschnitt im Durchmesser reduzierten Kragen K. Dieser gegenüber der Steuerschulter 34 vorstehende Kragen K taucht bei Herbeiführung der Kupplungsstellung in die Stecköffnung 12 der einen Kupplungshälfte I ein. Seine zylindrische Mantelwand 36 gelangt dabei in Dichtungsanlage zum Dichtungsring 14 dieser Stecköffnung 12.

Beim Ausführungsbeipiel ist die Ventilbüchse 29 an ihrem dem Kragen K gegenüberliegenden Ende gegabelt, so daß zufolge Belassung eines Zwischenraums eine zur Schulter 33 hin offene Federkammer 37 für die Ventilbüchsen-Belastungsfeder 32 erreicht ist. Die beiden Gabelschenkel a, b in Form freistehender, paralleler verlaufender Büchsen-Ringwände sind im Bereich der Steuerschulter 34 lose miteinander verbunden. Die Steuerschulter 34 besteht dort aus einem einwärts gerichteten, also senkrecht zur Längsmittelachse x-x ausgerichteten Ringbund 38, welcher sich an einem auswärts gerichteten Ringbund 39 des den Kragen K bildenden Teiles abstützt bzw. dieses Teil in Kupplungssteckrichtung mitschleppt. Auch das aus Außen- und Innengehäuse bestehende Kupplungsgehäuse der Ventilhälfte II ist gegabelt. Die diesbezüglichen Gabelschenkel sind mit c und d bezeichnet. Bei ausgefahrener, d. h. in Schließstellung befindlicher Ventilbüchse 29 verbleibt immer noch ein Überlappungsbereich von etwa der Hälfte der Gesamt-Führungslänge. Da der Zwischenraum zwischen den aneinander führenden Gabelschenkeln a, c und b, d die Federkammer 37 bilden, sind zur Vermeidung einer Verhakung der Federwindungen die Endbereiche zu Auflaufschrägen gestaltet. Außerdem ist zwischen den Gabelschenkeln b und d noch ein Dichtungsring 40 gelegt. Letzterer sitzt in einer Ringnut in der Mantelwand der den Gabelschenkel b bildenden Ringwand. Das bringt eine wirksame Abdichtung der Federkammer 37 gegenüber dem die Kupplungshälfte durchströmenden Medium.

Auch die Kupplungshälfte II ist an einer vertikalen Tragplatte 41 befestigt, vorzugsweise verschraubt. Es kann sich bezüglich dieser Befestigung in beiden Fällen auch um eine sogenannte schwimmende Zuordnung handeln, dies zum Zwecke einer möglichst selbstzentrierenden Steckzuordnung der zwangsgesteuert zugeführten Kupplungshälften.

Gerade eine solche Zwangssteuerung eröffnet die Möglichkeit, die Ventilbüchse 29 freistehend vorragen zu lassen. Das Medium strömt in Richtung des Pfeiles y über die eine Kupplungshälfte I zu. Der entsprechende Mediendruck wirkt im Sinne einer Schließunterstützung des Ventiltellers 3. Aus diesem Grunde kann hinsichtlich der dortigen Feder 9 von einer schwächeren Feder ausgegangen werden.

Zwischen Innengehäuse 21 und Außengehäuse 26 der anderen Kupplungshälfte II ist eine weitere Ringdichtung 42 eingeschaltet.

In beiden Fällen setzen sich die Innengehäuse in koaxial ausgerichtete Anschlußstutzen 43 bzw. 44 für nicht näher dargestellte Rohrleitungen fort.

Die Funktion ist kurz zusammengefaßt wie folgt : Die bewegliche Kupplungshälfte wird der stationären Kupplungshälfte zwangsgesteuert axial zugeführt. Dabei taucht der vorstehende Kragen K der Kupplungshälfte II in die Stecköffnung 12 der Kupplungshälfte I ein. Zufolge der stärker ausgelegten Belastungsfeder 32 kommt es dabei sofort zum Dichtsitz zwischen Dichtungsring 14 und Mantelwand 36 des Kragens K, der schließlich mit seiner Stirnkante gegen die Schulter 15 tritt. In dieser Phase ist der in Richtung des Pfeiles y orientierte Medienfluß noch unterbunden. Erst ein weiteres Nähern der Kupplungshälften führt dazu, daß der Kopf 24 des Stößels 19 den Ventilteller 3 entgegen der Belastung der Feder 9 von seiner Sitzfläche 7 abhebt. Einhergehend hiermit schiebt die Stirnwand 35, gegen die Steuerschulter 34 der Ventilbüchse 29 tretend, diese entgegen der Kraft der Feder 32 zurück. Der leckfrei geöffnete Strömungsweg ist hergestellt. Wie aus Fig. 1 ersichtlich, wird selbst zufolge der Zweiteiligkeit der Büchse der den Kragen K bildende Gabelschenkel (Ringwand) mitgeschleppt, da die Stirnwand 35 gegen den Ringbund 39 tritt, der höhengleich mit der eigentlichen Steuerschulter 34 abschließt. Über den dortigen Z-Spalt erfolgt auch der Luftausgleich der Federkammer.

Beim Öffnen ergibt sich der umgekehrte Funktionsablauf, wobei der wesentliche Effekt auftritt, daß der bspw. durch Verkleben sich einstellende verstärkte Haftsitz zwischen Dichtungsring 14 und Kragen K im Sinne eines die Ventilbüchse 29 in ihren Dichtungssitz ziehenden, reibungsschlüssigen Mitschleppens genutzt wird, so daß die Trennkräfte bei der Aufhebung des Haftsitzes im Dichtungsbereich mitwirken. Auch ein stärkerer Haftsitz zwischen Dichtungsring 40 und dem Gabelschenkel d (Ringwand des Innengehäuses) wird günstig überwunden.

**Patentansprüche**

1. Schnellverschlußkupplung, bestehend aus zwei in dichtenden Sitz zueinander bringbaren Kupplungshälften (I, II), von denen die eine (I) einen gegen eine Sitzfläche (7) des Kupplungsgehäuses (8) federbelasteten (Belastungsfeder 9) Ventilteller (3) aufweist, welcher von einem Stößel (19) der anderen Kupplungshälfte (II) in die Ventil-Öffnungsstellung (Fig. 1) verlagerbar ist, welcher Stößel an einer rückwärtigen Flanke die Ventilsitzfläche (28) für das Verschlußventil der anderen Kupplungshälfte bildet derart, daß eine in Ventil-Schließrichtung belastete, im Außengehäuse (26) dieser Kupplungshälfte (II) ferderbelastet verschiebliche Ventilbüchse (29) mit ihrem Stirnrand (31) gegen die rückwärts gerichtete Flanke tritt, welche Ventilbüchse eine Steuerschulter (34) aufweist, gegen die der Stirnrand (35) des Außengehäuses (8) der einen Kupplungshälfte (I) tritt, welche Ventilbüchse (29) einen im Dichtsitz in das Außengehäuse (8) der einen Kupplungshälfte (I) eintretenden Kragen (K) besitzt, dadurch gekennzeichnet, daß der Kragen (K) über die Steuerschulter (34) vorsteht derart, daß die Ventilbüchse (29) an ihrem dem Kragen (K) gegenüberliegenden Ende gegabelt ausgebildet ist, wobei die beiden Gabelschenkel (a, b) in Überlappung liegen zum gegabelten Endbereich von Innen- und Außengehäuse (21, 26) der Gehäusehälfte (II) und im Zwischenraum zwischen den Gabelschenkeln (a, b, c, d) die Ventilbüchsen-Belastungsfeder (32) angeordnet ist, welcher so eine Federkammer (37) bildende Zwischenraum gegenüber dem Medium abgedichtet ist durch einen dichten Sitz zwischen den inneren Gabelschenkeln (b, d) der Ventilbüchse (29) und des Innengehäuses (21).

2. Schnellverschlußkupplung nach Anspruch 1, dadurch gekennzeichnet, daß die Dichtungsfläche der Ventilbüchse (29) vom Stirnrand (31) des Kragens (K) gebildet ist.

3. Schnellverschlußkupplung nach den Ansprüchen 1 und 2, dadurch gekennzeichnet, daß die beiden Gabelschenkel (a, b) der Ventilbüchse (29) aus zwei im Bereich der Steuerschulter (34) miteinander verbundenen Teilen besteht.

**Claims**

1. A snap-closure coupling consisting of two coupling halves (I, II) which may be brought together in a sealing seat and of which the one (I) exhibits a valve plate (3) which is spring loaded (loading spring 9) against a seat (7) on the coupling housing (8) and which may be displaced into the valve-open position (Figure 1) by a plunger (19) on the other coupling half (II), the said plunger being formed on a rear flank of the valve seat (28) for the shutoff valve on the other coupling half in such a way that a valve sleeve (29) which can be displaced in the outer housing (26) of the latter coupling half (II) against spring loading in the direction to close the valve, comes by its end edge (31) against the flank directed towards the rear, the said valve sleeve exhibiting a control shoulder (34) which comes up against the end edge (35) of the outer housing (8) of the one coupling half (I) and the said valve sleeve (29) having a collar (K) which enters with a sealing seat into the outer housing (8) of the one coupling half (I), characterized in that the collar (K) projects above the control shoulder (34) in such a way that the valve sleeve (29) at the opposite end of it from the collar (K) is made forked, the two prongs (a, b) of the fork overlapping the forked end region of inner and outer housings (21, 26) of the housing half (II) and in the space between the prongs (a, b, c, d) of the forks the spring (32) loading the valve sleeve is arranged, the said interspace thus forming a spring chamber (37) being sealed against the medium by a sealing seat between the inner prongs (b, d) of the forks on the valve sleeve (29) and the inner housing (21).

2. A snap-closure coupling as in Claim 1, characterized in that the sealing face of the valve sleeve (29) is formed by the end edge (31) of the collar (K).

3. A snap-closure coupling as in Claims 1 and 2, characterized in that the two prongs (a, b) of the fork of the valve sleeve (29) consist of two parts connected together in the region of the control shoulder (34).

**Revendications**

1. Raccord à fermeture rapide, composé de deux moitiés de raccord (I, II) appelées à être assemblées de manière étanche et dont l'une (I) comporte une tête de soupape (3) sollicitée élastiquement (ressort 9) vers une surface formant siège (7) du corps (8) du raccord par un ressort, ladite tête de soupape étant susceptible d'être amenée vers la position d'ouverture de la soupape (figure 1) par un poussoir (19) de l'autre moitié (II) de raccord, ce poussoir formant sur un flanc dirigé vers l'arrière la surface de siège (28) de la soupape de fermeture de ladite autre moitié de raccord, l'agencement étant tel qu'un fourreau de soupape (29) sollicité vers la position de fermeture de la soupape et déplaçable dans l'enveloppe extérieure (26) de cette moitié de raccord (II) sous l'effet d'une sollicitation élastique entre en contact, par son bord frontal (31), avec le flanc dirigé vers l'arrière, ledit fourreau présentant un épaulement de commande (34) avec lequel le bord frontal (35) de l'enveloppe extérieure (8) de la première moitié de raccord (I) entre en contact, cependant que ledit fourreau de soupape (29) comporte un col (K) qui vient se loger de manière étanche dans l'enveloppe extérieure (8) de la première moitié de raccord (I), caractérisé en ce que le col (K) dépasse de l'épaulement de commande (34), l'agencement étant tel que, dans sa zone opposée au col (K), le fourreau de soupape (29) présente une configuration de fourche, les deux branches (a, b) de la fourche étant placées de manière à recouvrir la zone terminale en forme de fourche de l'enveloppe intérieure et de l'enveloppe extérieure (21, 26) de ladite autre moitié de raccord (II), cependant que le ressort (32) sollicitant le fourreau de soupape est disposé dans l'intervalle défini entre les branches de fourche (a, b, c, d), lequel intervalle, qui forme ainsi un logement de ressort (37), étant fermé de manière étanche par rapport au fluide par un ajustage étanche entre les branches de fourche intérieures (b, d) du fourreau de soupape (29) et de l'enveloppe intérieure (21).

2. Raccord à fermeture rapide selon la revendication 1, caractérisé en ce que la surface d'étanchéité du fourreau de soupape (29) est formée par le bord frontal (31) du col (K).

3. Raccord à fermeture rapide selon la revendication 1 ou 2, caractérisé en ce que les deux branches de fourche (a, b) du fourreau de soupape (29) sont formées par deux parties reliées l'une à l'autre dans la zone de l'épaulement de commande (34).

FIG. 1

# FIG. 2

0 082 922